(19) Europäisches Patentamt
European Patent Office
Office européen des brevets

(11) **EP 0 552 643 B1**

(12) **EUROPÄISCHE PATENTSCHRIFT**

(45) Veröffentlichungstag und Bekanntmachung des Hinweises auf die Patenterteilung:
09.10.1996 Patentblatt 1996/41

(51) Int. Cl.⁶: **B60T 8/32**

(21) Anmeldenummer: 93100320.6

(22) Anmeldetag: 12.01.1993

(54) **Verfahren zur Bestimmung der Raddrehzahl**

Procedure for determining wheel speed

Procédé pour déterminer la vitesse de rotation de roues

(84) Benannte Vertragsstaaten:
DE FR GB IT

(30) Priorität: 24.01.1992 DE 4201867

(43) Veröffentlichungstag der Anmeldung:
28.07.1993 Patentblatt 1993/30

(73) Patentinhaber:
• TEMIC TELEFUNKEN microelectronic GmbH
74072 Heilbronn (DE)
• MERCEDES-BENZ AG
70327 Stuttgart (DE)

(72) Erfinder:
• Helldörfer, Reinhard
W-8523 Igelsdorf (DE)
• Leuteritz, Jürgen
W-8500 Nürnberg 90 (DE)
• Hettich, Gerhard, Dr.
W-8501 Dietenhofen (DE)
• Töpfer, Bernhard, Dr.
W-7000 Stuttgart 60 (DE)
• Gramann, Matthias
W-8567 Neunkirchen a. S. (DE)

(74) Vertreter: Maute, Hans-Jürgen, Dipl.-Ing.
TEMIC TELEFUNKEN microelectronic GmbH
Postfach 35 35
74025 Heilbronn (DE)

(56) Entgegenhaltungen:
EP-A- 0 203 346          EP-A- 0 393 375
WO-A-90/11214          WO-A-92/02392
DE-A- 3 138 834

## Beschreibung

Bei vielen Bremsprozessen von Kraftfahrzeugen ist die Kenntnis der Raddrehzahl bzw. eventueller Unterschiede in den Drehzahlen einzelner Räder von großer Bedeutung: beispielsweise müssen für Antiblockiersysteme (Bremsvorgang ohne blockierende Räder), für Differenzschlupfregelungen (optimale Bremswirkung bei allen Beladungszuständen des Kraftfahrzeugs) oder zur Bestimmung der Bremskraftschlußgrenze die Raddrehzahlen an allen Achsen des Fahrzeugs bekannt sein bzw. zumindest Aussagen über den Mittelwert der Raddrehzahlen vorliegen.

Üblicherweise wird die Raddrehzahl durch in der Radnabe integrierte Drehwinkelsensoren erfaßt. Eine derartige Messung der Raddrehzahl ist bei Fahrzeugen mit mehr als zwei Achsen - beispielsweise bei Lastkraftwagen mit Zugfahrzeug und Anhänger oder bei Lastkraftwagen mit einem Zugfahrzeug mit einer Nachlaufachse bzw. einer Vorlaufachse - jedoch aufwendig und kostenintensiv, da die Räder aller Achsen mit Sensoren versehen werden müssen; darüber hinaus werden - beispielsweise vom Zugfahrzeug zum Anhänger - zusätzliche Steckverbindungen benötigt. Sind einzelne Räder eines Fahrzeugs nicht drehzahlsensiert - beispielsweise bei Lastkraftwagen konventionelle Anhänger ohne ABS - ist keinerlei Aussage über die Raddrehzahl und damit auch oft keine zu-verlässige Steuerung bzw. Regelung des Bremsprozesses möglich.

In der DE 31 38 834 A1 ist ein Verfahren zur Steuerung des Bremsvorgangs bei einem Mehrachs-Fahrzeug mit einem Antiblockiersystem beschrieben, das mindestens eine sensierte und eine nicht-sensierte Achse aufweist. Die Räder der nicht-sensierten Achse werden über ein druckreduzierendes Ventil vom geregelten Bremsdruck für die sensierte Achse mitgesteuert. Die Druckreduzierung des druckreduzierenden Ventils ist mittels eines Signales aus der Blockierschutzelektronik nur dann eingeschaltet, wenn eine geregelte Bremsung erfolgt, wobei der Einschaltvorgang zur Verhinderung einer kurzzeitigen Unterbrechung der Druckreduzierung verzögert wird.

Der Erfindung liegt die Aufgabe zugrunde, ein Verfahren zur Bestimmung der Raddrehzahl beim Bremsvorgang eines Kraftfahrzeugs anzugeben, das die Ermittlung der Raddrehzahlen auch bei Kraftfahrzeugen mit teilweise nicht-drehzahlsensierten Rädern ermöglicht.

Diese Aufgabe wird erfindungsgemäß durch die Merkmale a) bis h) des Patentanspruchs 1 gelöst.

Vorteilhafte Weiterbildungen des erfindungsgemäßen Verfahrens ergeben sich aus den Unteransprüchen.

Bei Kenntnis der Raddrehzahlen der drehzahlsensierten Räder und der Druckwerte in den Bremszylindern läßt sich mit dem vorgestellten Verfahren unter Zuhilfenahme des Arbeitssatzes - dieser besagt, daß die während des Bremsvorgangs geleistete (raddrehzahlabhängige) Bremsarbeit der beim Bremsvorgang dem Kraftfahrzeug entzogenen kinetischen Energie entspricht - die Raddrehzahl an einem zusätzlichen nicht-drehzahlsensierten Rad bzw. der Mittelwert der Raddrehzahlen aller nicht-drehzahlsensierten Räder bestimmen, ohne daß Raddrehzahlsensoren an diesen Rädern benötigt werden. Sind die Raddrehzahlen während des Bremsvorgangs bekannt, lassen sich weitergehende Aussagen über den Bremsprozeß treffen - beispielsweise über die Schlupfdifferenz, die Kraftschlußausnützung und das Nachlassen der Bremswirkung (Bremsfading).

Die Bestimmung der Raddrehzahl umfaßt folgende Verfahrensschritte:

- Der Bremsvorgang wird in mehrere Zeitintervalle - mit jeweils konstantem Bremsdruck - unterteilt und in jedem Zeitintervall durch Bildung des Relativwerts die Bremsarbeit auf die jeweilige kinetische Energie bezogen.

- Ist der Bremsdruck an allen drehzahlsensierten Räder und zumindest der Mittelwert des Bremsdrucks für alle nicht-drehzahlsensierten Räder bekannt, kann in jedem Zeitintervall des Bremsvorgangs der Beitrag der drehzahlsensierten Räder zur Bremsarbeit bestimmt werden. Der Beitrag der nicht-drehzahlsensierten Räder zur Bremsarbeit kann bis auf einen raddrehzahlabhängigen Faktor bestimmt werden. Des weiteren können die masseabhängigen Beiträge aller Räder zur kinetischen Energie bestimmt werden.

- In einem Zeitintervall des Bremsvorgangs - dem Referenz-Zeitintervall - wird der Beitrag der nicht-drehzahlsensierten Räder zur Bremsenergie definiert. Entweder wird dieser Beitrag als Näherungswert ermittelt - indem im Referenz-Zeitintervall alle Räder des Fahrzeugs mit dem gleichen niedrigen Bremsdruck angesteuert werden, so daß in erster Näherung auch die Raddrehzahlen aller Räder übereinstimmen - oder dieser Beitrag wird vernachlässigbar klein gemacht - indem im Referenz-Zeitintervall der Bremsdruck 0 an den nicht-drehzahlsensierten Rädern vorgegeben wird. Im Referenz-Zeitintervall - dieses sollte vorteilhafterweise zu Beginn des Bremsvorgangs liegen - kann somit die Bremsarbeit vollständig bestimmt werden.

- Der (masseabhängige) Relativwert aus Bremsarbeit und kinetischer Energie im ersten Zeitintervall wird zum Relativwert in einem beliebigen zweiten Zeitintervall des Bremsvorgangs ins Verhältnis gesetzt und dadurch die Masse des Fahrzeugs eliminiert. Als einzige unbekannte und damit berechenbare Größe im zweiten Zeitintervall verbleibt nunmehr lediglich die Raddrehzahl des nicht-drehzahlsensierten Rads bzw. der nicht-drehzahlsensierten Räder.

- Wird nun der Bremsvorgang in mehrere Zeitintervalle unterteilt, kann in diesen jeweils der Mittelwert der Raddrehzahl aller nicht-drehzahlsensierten Räder ermittelt werden - beispielsweise der Mittelwert der Raddrehzahl an einer nicht-drehzahlsensierten Vorlaufachse oder Nachlaufachse eines LKW-Zugfahrzeugs oder der Mittelwert der Raddrehzahlen bei einem nicht-drehzahlsensierten Anhänger.

- Werden die Raddrehzahlen an allen Achsen eines Fahrzeugs in allen Zeitintervallen des Bremsvorgangs sukzessiv berechnet und ausgewertet, können daraus Aussagen über den Bremsvorgang (Schlupf, Schlupfdifferenz, Bremswirkung, Haftung ...) gewonnen und dieser kontrolliert gesteuert bzw. geregelt werden.

Das vorgestellte Verfahren vereinigt mehrere Vorteile in sich:

- die nicht-drehzahlsensierten Räder bzw. Achsen können besser am Bremsvorgang beteiligt werden, so daß der Bremsprozeß sicherer wird
- die Bremskraft kann erhöht und damit der Bremsvorgang verkürzt werden
- Blockierneigungen werden auch ohne ABS erkannt
- die Kraftschlußgrenze kann frühzeitig erkannt werden
- es werden keine zusätzlichen Sensoren benötigt, so daß es kostengünstig realisiert werden kann.

Das Verfahren zur Bestimmung der Raddrehzahl und einige Anwendungsmöglichkeiten werden im folgenden anhand eines Ausführungsbeispiels erläutert - bei einem LKW-Zugfahrzeug mit zwei drehzahlsensierten Hauptachsen und einer nicht-drehzahlsensierten Nachlaufachse.

Die Nachlaufachse (oder auch Liftachse) eines dreiachsigen Zugfahrzeugs hat in der Regel eine geringere statische bzw. dynamische Last als die zugehörige Achse (Hauptachse), zu tragen; dies bedingt, daß die Nachlaufachse sehr sensibel gegenüber einer möglichen Überbremsung ist. Um die Nachlaufachse beim Bremsvorgang kontrolliert anzusteuern, wird die Raddrehzahl-Information für diese Achse während des Bremsprozesses sukzessive durch Bestimmung der Bremsarbeit und der kinetischen Energie ermittelt:

- die Bremsarbeit $W_{BR}$ eines Rades hängt von der auf dem Reifenaufstandspunkt wirksamen Bremskraft $F_B$ des Rades ab - die Bremskraft $F_B$ ist durch das Produkt aus Bremsdruck p und Bremskennwert c gegeben, so daß sich die zugehörige Bremsarbeit $W_{BR}$ eines Rads folgendermaßen ausdrücken läßt:

$$W_{BR} = p \cdot c \cdot n \cdot t_i, \qquad (1)$$

wobei n die Raddrehzahl und $t_i$ die Länge des jeweiligen Zeitintervalls i während des Bremsprozesses ist.

Die gesamte während des Zeitintervalls i geleistete Bremsarbeit $W_{Bi}$ aller Räder des LKWs ist durch die Summe der Bremsarbeit $W_{BR}$ der einzelnen Räder gegeben.

- die kinetische Energie $W_{Ki}$ während des Zeitintervalls i hängt von der Masse m und der Geschwindigkeit v des LKWs ab und ergibt sich zu:

$$W_{Ki} = 1/2\, mv^2 \qquad (2)$$

Bei Bildung des Relativwerts $W_{Ri} = W_{Bi}/W_{Ki}$ in einem Zeitintervall i verbleiben als unbekannte Größen die Raddrehzahl n der beiden nicht-drehzahlsensierten Räder an der Nachlaufachse und die Masse m des Zugfahrzeugs; die Geschwindigkeit v des LKWs, die Länge der Zeitintervalle $t_i$, der Bremskennwert c und die Bremsdrücke p können ermittelt bzw. sensiert werden. Werden die Relativwerte $W_R = W_B/W_K$ zweier Zeitintervalle $t_1$ (Relativwert $W_{R1}$) und $t_2$ (Relativwert $W_{R2}$) zueinander ins Verhältnis gesetzt, wird die (unbekannte) Masse m des Zugfahrzeugs eliminiert, so daß lediglich die Raddrehzahlen n der beiden nicht-drehzahlsensierten Räder der Nachlaufachse in den beiden Zeitintervallen $t_1$ und $t_2$ als unbekannte Größen verbleiben. In einem Zeitintervall $t_1$ des Bremsprozesses - dem "Referenz"-Zeitintervall - wird nun der Beitrag der beiden nicht-drehzahlsensierten Räder zur Bremsarbeit $W_{B1}$ definiert: entweder wird der Bremsdruck p = o an den beiden nicht-drehzahlsensierten Rädern eingesteuert - nach Gleichung (1) ergibt sich daraus der Wert $W_{BR}$ = o an diesen beiden Rädern - oder an allen Rädern des Zugfahrzeugs wird der gleiche Bremsdruck p eingesteuert, so daß in erster Näherung auch die Raddrehzahlen aller Räder (der drehzahlsensierten Räder mit den beiden Rädern der Nachlaufachse) übereinstimmen. Durch sukzessive Bildung des Verhältnisses der Relativwerte $W_{R1}/W_{Ri}$ in allen Zeitintervallen i des Bremsprozesses kann ein gemittelter Raddrehzahlwert für die beiden nicht-drehzahlsensierten Räder der Nachlaufachse während des Bremsprozesses bestimmt werden; der auf diese Weise bestimmte Wert kann anhand anderer Kriterien (beispielsweise Radgeschwindigkeitsanstieg) verifiziert werden.

Eine Auswertung der ermittelten Raddrehzahlwerte während der verschiedenen Zeitintervalle des Bremsvorgangs liefert beispielsweise folgende Aussagen über den Bremsprozeß:

- den Schlupf an der Nachlaufachse bzw. die Schlupfdifferenz zwischen der Nachlaufachse und den Hauptachsen
- der Bremsdruck in den Bremszylindern der Nachlaufachse und damit die Bremskraftverteilung zwischen den Hauptachsen und der Nachlaufachse kann während des Bremsvorgangs so geregelt bzw. gesteuert werden, daß sich eine optimale Bremsung bzw. Bremswirkung einstellt
- der Schlupf der Nachlaufachse kann als Funktion des Bremsdruckes ermittelt werden; durch die Auswertung dieser Funktion kann entschieden werden, ob ein "normaler" Bremsvorgang stattfindet, ob die Kraftschlußgrenze zwischen Reifen und Straße erreicht ist (LKW schleudert), oder ob die Bremswirkung nachläßt ("fading").

Das Verfahren zur Bestimmung der Raddrehzahl bzw. eines gemittelten Werts der Raddrehzahlen kann neben dem vorgestellten Beispiel (nicht-drehzahlsensierte Nachlaufachse eines LKWs), beispielsweise auch für die Nachlaufachse eines dreiachsigen LKW-Zugfahrzeugs oder für einen Anhänger an einem LKW-Zugfahrzeug durchgeführt werden.

**Patentansprüche**

1. Verfahren zur Bestimmung der Raddrehzahl beim Bremsvorgang eines Kraftfahrzeugs, wobei

    a) mindestens ein Rad des Kraftfahrzeugs drehzahlsensiert wird und mindestens ein weiteres Rad nicht-drehzahlsensiert ist,

    b) der Bremsdruck $(p)$ in den Bremszylindern erfaßt wird,

    c) der Bremsvorgang in mehrere Zeitintervalle $(t_1, t_2, t_i)$ mit jeweils konstantem Bremsdruck $(p)$ unterteilt wird,

    d) in den Zeitintervallen $(t_1, t_2, t_i)$ die vom Produkt aus Bremsdruck $(p)$, Bremskennwert $(c)$, Raddrehzahl $(n)$ und Länge des Zeitintervalls $(t_1, t_2, t_i)$ abhängige Bremsarbeit $(W_{BR})$ der einzelnen Räder bestimmt und daraus die gesamte Bremsarbeit $(W_B)$ des Kraftfahrzeugs ermittelt wird,

    e) in den Zeitintervallen $(t_1, t_2, t_i)$ jeweils der energetische Relativwert $(W_{R1}, W_{R2}, W_{Ri})$ aus der Bremsarbeit $(W_B)$ und der kinetischen Energie $(W_K)$ des Kraftfahrzeugs gebildet wird,

    f) in einem als Referenz-Zeitintervall dienenden Zeitintervall $(t_1)$ die Bremsarbeit $(W_{BR})$ der nicht-drehzahlsensierten Räder definiert vorgegeben wird,

    g) das Verhältnis des energetischen Relativwerts $(W_{R1})$ im Referenz-Zeitintervall $(t_1)$ zu den energetischen Relativwerten $(W_{R2}, W_{Ri})$ in den weiteren Zeitintervallen $(t_2, t_i)$ gebildet wird,

    h) aus dem Verhältnis $(W_{R1}/W_{R2}, W_{R2}/W_{Ri})$ der energetischen Relativwerte $(W_{R1}, W_{R2}, W_{Ri})$ der Mittelwert für die Raddrehzahl $(n)$ aller nicht-drehzahlsensierten Räder in den weiteren Zeitintervallen $(t_2, t_i)$ ermittelt wird.

2. Verfahren nach Anspruch 1, dadurch gekennzeichnet, daß im Referenz-Zeitintervall $(t_1)$ an allen Rädern des Kraftfahrzeugs der gleiche Bremsdruck $(p)$ eingestellt wird, und daß für alle nicht-drehzahlsensierten Räder als Raddrehzahl $(n)$ im Referenz-Zeitintervall $(t_1)$ der an den drehzahlsensierten Rädern gemessene Wert vorgegeben wird.

3. Verfahren nach Anspruch 1, dadurch gekennzeichnet, daß im Referenz-Zeitintervall $(t_1)$ an allen nicht-drehzahlsensierten Rädern für den Bremsdruck $(p)$ der Wert 0 eingestellt wird.

4. Verfahren nach einem der Ansprüche 1 bis 3, dadurch gekennzeichnet, daß das zeitliche Verhalten der Raddrehzahlen $(n)$ während des Bremsvorgangs durch sukzessive Auswertung der weiteren Zeitintervalle $(t_2, t_i)$ bestimmt wird.

5. Verfahren nach Anspruch 4, dadurch gekennzeichnet, daß durch die Auswertung der weiteren Zeitintervalle $(t_2, t_i)$ der Differenzschlupf zwischen verschiedenen Achsen eines Kraftfahrzeugs bestimmt wird.

6. Verfahren nach Anspruch 4, dadurch gekennzeichnet, daß durch die Auswertung der weiteren Zeitintervalle $(t_2, t_i)$ die Kraftschlußgrenze bestimmt wird.

7. Verfahren nach Anspruch 4, dadurch gekennzeichnet, daß durch die Auswertung der weiteren Zeitintervalle $(t_2, t_i)$ das Nachlassen der Bremswirkung bestimmt wird.

8. Verfahren nach einem der Ansprüche 1 bis 7 zur Bestimmung der Raddrehzahl an der nicht-drehzahlsensierten Vorlaufachse des Zugfahrzeugs eines Lastkraftwagens.

9. Verfahren nach einem der Ansprüche 1 bis 7 zur Bestimmung der Raddrehzahl an der nicht-drehzahlsensierten Nachlaufachse des Zugfahrzeugs eines Lastkraftwagens.

10. Verfahren nach einem der Ansprüche 1 bis 7 zur Bestimmung der Raddrehzahl an den Achsen des Anhängers eines Lastkraftwagens.

**Claims**

1. Method of determining the rotational speed of wheels during braking of a motor vehicle, wherein

    a) at least one wheel of the motor vehicle has a rotational speed sensor and at least one further wheel does not have a rotational speed sensor,

    b) the brake pressure $(p)$ in the brake cylinders is detected,

c) the braking operation is divided into a plurality of time intervals ($t_1$, $t_2$, $t_i$) each with a constant brake pressure (p),

d) the braking work ($W_{BR}$) of the individual wheels, which is dependent upon the product of the brake pressure (p), brake characteristic (c), rotational speed of the wheel (n) and length of the time intervals ($t_1$, $t_2$, $t_i$), is determined in the time intervals ($t_1$, $t_2$, $t_i$) and from this the total braking work ($W_B$) of the motor vehicle is ascertained,

e) in each case the relative energy value ($W_{R1}$, $W_{R2}$, $W_{Ri}$) is formed from the braking work ($W_B$) and the kinetic energy ($W_K$) of the motor vehicle in the time intervals ($t_1$, $t_2$, $t_i$),

f) the braking work ($W_{BR}$) of the wheels which are not provided with a rotational speed sensor is defined and predetermined in a time interval ($t_1$) which serves as reference time interval,

g) the ratio of the relative energy value ($W_{R1}$) in the reference time interval ($t_1$) to the relative energy values ($W_{R2}$, $W_{Ri}$) in the further time intervals ($t_2$, $t_i$) is formed,

h) from the ratio ($W_{R1}/W_{R2}$, $W_{R2}/W_{Ri}$) of the relative energy values ($W_{R1}$, $W_{R2}$, $W_{Ri}$) the mean value for the rotational speed (n) of all wheels which are not provided with a rotational speed sensor is ascertained in the further time intervals ($t_2$, $t_i$).

2. Method as claimed in Claim 1, characterised in that the same brake pressure (p) is set on all wheels of the motor vehicle in the reference time interval ($t_1$), and that for all wheels which are not provided with a rotational speed sensor the value measured on the wheels which are provided with a rotational speed sensor is predetermined as the rotational speed (n) in the reference time interval ($t_1$).

3. Method as claimed in Claim 1, characterised in that in the reference time interval ($t_1$) the value 0 is set for the brake pressure (p) on all wheels which are not provided with a rotational speed sensor.

4. Method as claimed in one of Claims 1 to 3, characterised in that the behaviour over time of the rotational speeds (n) of the wheels during the braking operation is determined by successive evaluation of the further time intervals ($t_2$, $t_i$).

5. Method as claimed in Claim 4, characterised in that the differential slippage between different axles of a motor vehicle is determined by the evaluation of the further time intervals ($t_2$, $t_i$).

6. Method as claimed in Claim 4, characterised in that the traction limit is determined by the evaluation of the further time intervals ($t_2$, $t_i$).

7. Method as claimed in Claim 4, characterised in that the decline in the braking effect is determined by the evaluation of the further time intervals ($t_2$, $t_i$).

8. Method as claimed in one of Claims 1 to 7 for determining the rotational speed of wheels on the forward axle, which is not provided with rotational speed sensors, of the tractor unit of a heavy goods vehicle.

9. Method as claimed in one of Claims 1 to 7 for determining the rotational speed of wheels on the trailing axle, which is not provided with rotational speed sensors, of the tractor unit of a heavy goods vehicle.

10. Method as claimed in one of Claims 1 to 7 for determining the rotational speed of wheels on the axles of the trailer of a heavy goods vehicle.

**Revendications**

1. Procédé pour déterminer la vitesse de rotation de roues lors du freinage d'un véhicule automobile, selon lequel

a) on détecte la vitesse de rotation d'au moins une roue du véhicule et la vitesse de rotation d'au moins une autre roue n'est pas détectée,
b) on détecte la pression de freinage (p) dans les cylindres de frein,
c) on divise le freinage en plusieurs intervalles de temps ($t_1$, $t_2$, $t_i$) à l'intérieur de chacun desquels la pression de freinage (p) est constante,
d) on détermine, dans les intervalles de temps ($t_1$, $t_2$, $t_i$), le travail de freinage ($W_{BR}$) des différentes roues, travail qui dépend du produit de la pression de freinage (p), du coefficient de freinage (c), de la vitesse de rotation (n) de la roue et de la durée de l'intervalle de temps ($t_1$, $t_2$, $t_i$), et on établit à partir de là l'ensemble du travail de freinage ($W_B$) du véhicule,
e) on forme, dans chacun des intervalles de temps ($t_1$, $t_2$, $t_i$), la valeur relative énergétique ($W_{R1}$, $W_{R2}$, $W_{Ri}$) du travail de freinage ($W_B$) et de l'énergie cinétique ($W_K$) du véhicule,
f) on spécifie de façon définie, dans un intervalle de temps ($t_1$) servant d'intervalle de temps de référence, le travail de freinage ($W_{BR}$) des roues dont la vitesse de rotation n'est pas détectée,
g) on forme le rapport de la valeur relative énergétique ($W_{R1}$) dans l'intervalle de temps de référence ($t_1$) aux valeurs relatives énergéti-

ques ($W_{R2}$, $W_{Ri}$) dans les autres intervalles de temps ($t_2$, $t_i$),

h) à partir du rapport ($W_{R1}/W_{R2}$, $W_{R2}/W_{Ri}$) des valeurs relatives énergétiques ($W_{R1}$, $W_{R2}$, $W_{Ri}$), on détermine, dans les autres intervalles de temps ($t_2$, $t_i$), la valeur moyenne pour la vitesse de rotation (n) de toutes les roues dont la vitesse de rotation n'est pas détectée.

2. Procédé selon la revendication 1, caractérisé en ce que, dans l'intervalle de temps de référence ($t_1$), on ajuste la même pression de freinage (p) sur toutes les roues du véhicule et que, pour toutes les roues dont la vitesse de rotation n'est pas détectée, on spécifie, en tant que vitesse de rotation de roue (n) dans l'intervalle de temps de référence ($t_1$), la valeur mesurée sur les roues dont la vitesse de rotation est détectée.

3. Procédé selon la revendication 1, caractérisé en ce que, dans l'intervalle de temps de référence ($t_1$), on ajuste la valeur 0 pour la pression de freinage (p) sur toutes les roues dont la vitesse de rotation n'est pas détectée.

4. Procédé selon une des revendications 1 à 3, caractérisé en ce qu'on détermine le comportement dans le temps des vitesses de rotation de roues (n), pendant le freinage, par exploitation répétée des autres intervalles de temps ($t_2$, $t_i$).

5. Procédé selon la revendication 4, caractérisé en ce que, par l'exploitation des autres intervalles de temps ($t_2$, $t_i$), on détermine le glissement différentiel entre différents essieux d'un véhicule automobile.

6. Procédé selon la revendication 4, caractérisé en ce que, par l'exploitation des autres intervalles de temps ($t_2$, $t_i$), on détermine la limite d'adhérence.

7. Procédé selon la revendication 4, caractérisé en ce que, par l'exploitation des autres intervalles de temps ($t_2$, $t_i$), on détermine l'affaiblissement de l'action de freinage.

8. Procédé selon une des revendications 1 à 7 pour déterminer la vitesse de rotation de roues sur l'essieu de tête, non soumis à la détection de la vitesse de rotation de roues, du véhicule tracteur d'un camion.

9. Procédé selon une des revendications 1 à 7 pour déterminer la vitesse de rotation de roues sur l'essieu traîne, non soumis à la détection de la vitesse de rotation de roues, du véhicule tracteur d'un camion.

10. Procédé selon une des revendications 1 à 7 pour déterminer la vitesse de rotation de roues sur les essieux de la remorque d'un camion.